# EUROPEAN PATENT APPLICATION

(11) **EP 2 741 471 A1**
(43) Date of publication of application: **11.06.2014**
(21) Application number: 12382486.4
(22) Date of filing: 07.12.2012
(51) Int. Cl.: H04L 29/08

(54) **Method, system and devices for content caching and delivering in IP networks**

(71) Applicant: Alcatel Lucent, 75007 Paris (FR)
(72) Inventor: Kisel, Andrey, MAIDENHEAD, SL6 2PJ (GB); Niven-Jenkins, Benjamin, Milton, CB24 6DD (GB); De Vleeschauwer, Danny, 2018 ANTWERP (BE); Villegas Nuñez, Alvaro, 28050 MADRID (ES)
(74) Representative: Carpintero Lopez, Francisco

(57) **Abstract**

A content request is sent (31) from a client (4) and the network routes (321) it to origin server (301) and mirrors (322) it to a transparent cache server (103). The transparent cache server (103) takes a decision on whether to deliver the content or not. If the transparent cache server (103) decides to deliver the content (33), it takes over the content delivery session setup between the client (4) and the origin server (301), impersonating and then disconnecting or triggering disconnection of the origin server (301). If the transparent cache server (103) is not delivering the content, due to cache failure, because the decision of the transparent cache server (103) is not to perform the delivery or because, being the decision of the transparent cache server (103) to deliver the content, the origin server (301) is still being connected, the content delivery session continues (34) between the origin server (301) and the client (4).

## Description

### BACKGROUND OF THE INVENTION

### Technical field

The present invention relates to computer networks and, more particularly, to the caching and delivery of multimedia contents (e.g., text, audio, video, software, etc., and any combination of them) in Internet Protocol (IP) networks including content delivery network (CDN) services.

### Description of related art

Web caching or content caching means that the most popular (Web) content (also known as over-the-top content or OTT content) is stored and delivered from a Service Provider network, rather than from an Origin Server being the original content location on the Web. Service providers and network operators widely deployed caching to reduce bandwidth over the peering link and improve Quality of Experience (QoE) for subscribers. Content caching typically requires business relations between content owners and network operators. Content owners provide content to the network operators, while network operators cache and deliver the content to the subscribers from their own Content Delivery Networks (CDNs).

A content delivery network or content distribution network (CDN) is a system of computers containing copies of data placed at various nodes of a network, more particularly, CDN is a collection of web caches distributed across multiple locations to deliver content more efficiently to users. When skillfully designed and implemented, a CDN can improve access to the data it caches by placing a number of copies closer to end users resulting in increased access bandwidth to the data, better scaling, resiliency and reduced latency. Origin (web) server often contains initial content copy and has access to content metadata for generating content specific responses, e.g. content headers and caching headers, when serving content request. Web cache does not have access to content metadata for generating content specific responses, therefore it instead caches the content and content responses from the Origin web server. Data or media content types often cached in CDNs include multimedia objects (audio and video objects), web objects (text, graphics, URLs and scripts), downloadable objects (media files, software, documents), applications, live media (events), and database queries. While Web caching is simple in concept (storing the most popular Internet content and delivering it from the operator's network, rather than always retrieving it from a remote content source), it must be performed in a way that ensures the integrity of services, content and the network.

In deploying on-net CDNs, Service Providers are aiming to serve a growing consumer population that watches premium content from many different online sources. But Service Providers do not typically have business relations with all online Content Providers and therefore some content is not initially provided by content owners to the network operators for delivery via CDNs. Most network operators have a need to reduce transport costs, improve QoE and manage traffic surges for online content even if content is not initially provided by content owners. Transparent caching is an emerging technology of caching which address these challenges. These solutions enable service providers to cache and deliver over-the-top (OTT) content from inside their networks. Transparent caching can be viewed as one use (application) of a CDN, no different than other uses (e.g., multi-screen video delivery, multi-tenant CDN for B2B customers, CDN-assisted Video on Demand,...). Both content delivery networks and transparent caching systems cache content at the operator's network edge. Over half of all network operators are expected to deploy transparent caching and CDNs by 2014.

The term 'transparent caching' refers to the fact that the content is cached and delivered without the involvement — and often without the knowledge - of the content owners. Transparent caching often refers to caching that:
- Always delivers fresh content
- Preserves end-to-end application logic, ensuring full functionality in areas such as user authorization, geo-control and device-specific content.
- Enables full compliance with copyright legislation.
- Introduces no additional access point that could pose a security breach for the operator's network
- It is invisible to both the content originator and the end user.

With transparent caching, content is stored and served from the edge of the operator's network, saving core and IP transit network resources and accelerating delivery to the subscriber. Transparent caching automatically intercepts popular Web (Internet) content and serves content requests from the cache, instead of transiting across the network and peering point to the Origin Web location. By reducing demand on transit bandwidth and minimising delays, network operators can deliver better QoE especially during peak periods and reduce peering costs.

Since this type of caching is 'transparent' or 'invisible' to the content owners, network operators can benefit from traditional caching advantages when business relations with the content owners are not possible for some reasons. Transparent caching has aforementioned characteristics of traditional caching, for example, delivering content from locations close to the subscribers, maintaining content 'freshness', preserving end-to-end business rules and application logic such as geo-restrictions, and ensuring content security.

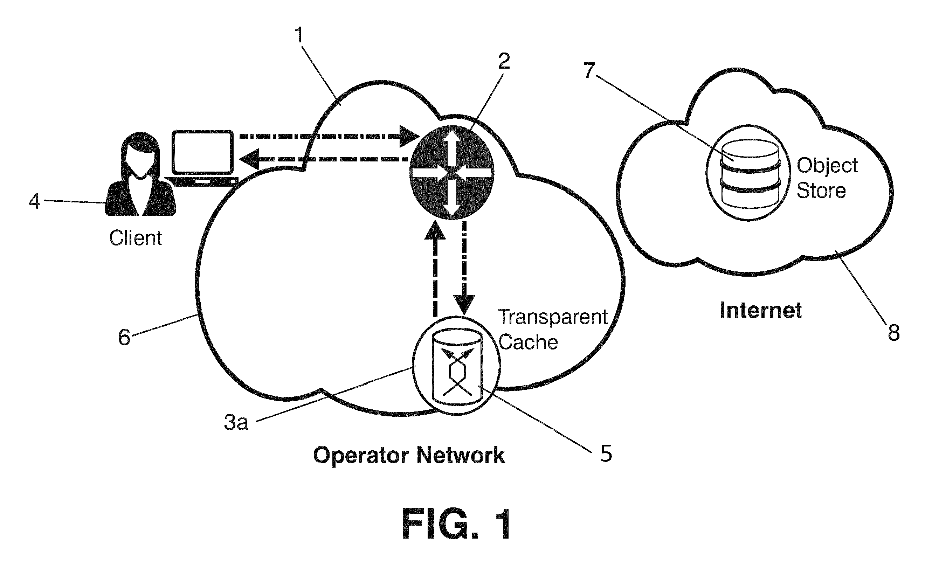

The best known prior art solutions of transparent caches are deployed on 'data path' basis and illustrated on Figure 1: each client request for the content is routed to the cache and the cache either serves the request or passes it to the content Origin Sever. This kind of existing solutions, based on deploying transparent caches on the data path, for example, using Policy Based Routing (PBR), has several disadvantages as explained below. Clearly, with these approaches, any cache failure leads to network outrage. Load-balancers can be used in front of transparent caches with at least N+1 redundancy to protect against network outrages, but this makes overall solution expensive, and prevents transparent caches from closely overlaying underlying network topology, e.g. deploying transparent caches deep in network locations such as exchanges. Even though a single transparent cache can serve all exchange users, extra load-balancer and extra cache would be required to prevent network outrage in case of the cache failure that increases complexity and costs.

There are several shortcomings of the prior art solutions based on deploying transparent caches on the data path, which can be summarized as follows:
- Transparent cache failure (Figure 1) on the step (3a, 3b) of intercepting and serving client requests causes network outrage: a cache failure means that the client request cannot not be served (3a) from the cache, redirected to another cache or passed to the Origin server (7) and, hence, causing subscriber client to time-out.
- Person skilled in the art could deploy load balancer in front of transparent cache(s) and N+1 redundancy, but this enhancement would make the solution expensive, since it would require a centralized location to host load-balancers and transparent cache(s).
- Load-balancer approach coupled with HyperText Transfer Protocol (HTTP) redirect only works for clients supporting off-domain redirects, e.g. using HTTP 302 message. Some known clients, including Xbox, do not allow off-domain redirects. Therefore, there is a need of enabling transparent caching for all existing subscriber clients without risk of causing network outrage and without reliance on load-balancers.

### SUMMARY

In light of the present need for an enhanced solution for transparent caching which overcomes all the above-mentioned shortcomings of the 'on-the-data path' based transparent caching, a brief summary of various exemplary embodiments on here proposed "out-of-path" basis is presented.

Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

The present invention is well suited for all known subscriber clients, e.g. Xbox, and does not require client modifications.

The present invention is applicable to Internet and online CDNs.

The present invention suggests an 'out-of-path' method/system for transparent caching which enables deployment of a single transparent cache deep in network locations, without risk of causing network outrage in the case that transparent cache fails.

In an embodiment of the invention, the 'out-of-path' proposal uses mirroring of the content traffic to duplicate (mirror) content traffic and send to the transparent cache a copy of the traffic. In an exemplary embodiment, mirroring of the content traffic can be done in a number of ways, e.g. using the port mirror capability provided by Alcatel-Lucent 7750 Service Router (SR), other Border Network Gateway (BNG) or alternatively using network taps. 7750 SR port mirroring is the most cost efficient way to duplicate traffic for transparent caching.

According to an aspect of the invention, a method of transparent caching is provided for multimedia content delivering in which:
- a request for multimedia content to an IP network, e.g., a CDN,; from a client is received;
- the received request is routed from the IP network, e.g. through an IP Service Router, to an Origin Server; and the method comprises the following steps:
- mirroring the received request to a Transparent Cache Server; and
- taking a decision upon the content delivery on whether the Transparent Cache Server or other cache delivers the content or not.

In a possible embodiment of the invention, if the taken decision is to deliver the content from transparent cache or other CDN location, the method further comprises taking over content delivery by the transparent cache, or by other cache, and stopping delivery from the Origin Server.

In another possible embodiment of the invention, if the taken decision is to deliver the content from the Origin Server, the method allows the content delivery from the Origin Server to the client proceed as usual.

Multimedia content can be defined by means of one or more media objects or media segments. In an exemplary embodiment, the invention is applicable to either progressive HTTP content delivery or segmented HTTP content delivery (also known as Dynamic Adaptive Streaming over HTTP: DASH). The Origin Server can either store the content or acquire it from a content source node of the Internet Content Provider's network (or by other means) where the content to be delivered over Internet is originally stored.

In an embodiment of the invention, the Transparent Cache Server is the network entity of the operator's network, e.g. transparent cache(s) attached to the CDN, in charge of deciding whether to deliver the content or let the Origin Server do it. In an alternative embodiment, if the cache decides not to deliver the content, or the cache simply fails, the Origin Server delivers the content. The cache may use duplicated (mirrored) traffic for caching the content for future requests (also known as filling the cache). In another alternative embodiment, if the cache decides to deliver the content, then the cache itself 'takes over' content delivery session from the Origin Server impersonating it and disconnecting said Origin Server. This takeover of the content delivery session and the disconnection of the Origin Server by the Transparent Cache Server are perfomed transparently to the client.

In one embodiment, in order to take over the session, the transparent cache needs to spoof the origin (web) server and the client, and, in addition, mimic them on network level, e.g. with TCP sequence (SEQ) and acknowledgement (ACK) numbers. The transparent takeover (and final disconnection of the web server) by the transparent cache may be comprised of several steps:

Step i) Session takeover at the transport level followed by takeover on application level, e.g. using the HyperText Transfer Protocol (HTTP).

In an embodiment of the invention, Transparent Cache Server spoofs and mimics the Origin Server by intercepting TCP session and inserting application level redirect message (e.g. HTTP 302 Redirect) into communication between the Origin Server and the client. The redirect message points to the transparent cache server itself or to other nominated cache. This step is transparent because the redirect message appears to the client as a genuine message from the Origin Server.

Step ii) Session takeover at the transport or network layer, e.g. using the Transmission Control Protocol (TCP).

In an embodiment of the invention, if the client does not respond to the redirect message of Step i) and the session continues between the client and the Origin Server, the Transparent Cache Server continues to take over transport or network session. For example, during TCP session, the cache spoofs the client towards the Origin Server, and, in turn, spoofs the Origin Server towards the client mimicking Origin TCP SEQ numbers and TCP ACK numbers, and mimicking client to reset connection with the Origin Server.

Step iii) As soon as decision is made to deliver content by the Transparent Cache Server, the cache server may attempt to prevent web server from communicating with the client mimicking client behaviour when data buffers are full, e.g. sending to the Origin server TCP packets with window size set to value 0. This step protects the cache from loosing taken over sessions until the Origin server is fully disconnected, for example, if packet straddles.

Step iv) The Transparent Cache Server disconnects the Origin (Web) server without affecting the client by mimicking client connection reset behaviour.

Steps iii) and iv) may be repeated multiple times until success due to network latency and race conditions.

In alternative embodiment, the cache may chose not to proceed with session takeover at the transport or network layer described in steps ii) and iv), for example, if the client does not respond to the application level takeover. The cache can instead learn about such client behavior. The cache can then change (re-write) manifest file specifying URL for segmented HTTP content to point to the cache for subsequent requests from the same client. In this scenario the cache can execute steps i) and iii), but deliver manifest file instead of inserting redirect message in step i). The cache may also choose to deliver manifest file without previous failed application takeover attempts, for example, if the cache can learn by other means that the client does not support application level takeover. Such other means can include pre-provisioned metadata or information acquired from intercepted content requests.

If the Transparent Cache Server decides not to deliver the content, there is no takeover of content delivery session by the transparent cache; instead, the content delivery session continues between the Origin Server and the client. But also in the case that the cache decides to deliver the content and, for example, the Origin Server has not been disconnected fast enough, the content delivery session can continue between the Origin Server and the client. In this case, parts of the takeover steps need to be repeated until the Transparent Cache Server successfully disconnects the Origin Server and can continue delivering the request 'impersonating' it.

The order of the method steps is not a critic issue, so other method steps orders are also possible.

According to another aspect of the invention a transparent cache server is provided, comprising:
- means for receiving mirrored content requests from a client to a network, e.g., CDN, (the network comprises means for having the received requests mirrored);
- means for taking decision on whether to deliver the content or not (and if so, let an Origin Server, to which the received request is routed from the CDN, to do the content delivery to the client).

In a possible enbodiment, in case that decision is taken to deliver the content from a transparent cache, the transparent cache server further comprises:
- means for taking over content delivery by the transparent cache server itself or for indicating to other (transparent) cache to take over content delivery, and
- means for triggering disconnection of the Origin Server, since decision is taken to deliver the content from cache, to stop Origin Server from delivering content (if the taken decision is not to deliver content from cache, the transparent cache server lets Origin Server deliver content as usually).

Another aspect of the invention relates to a system for media content delivery which is a telecommunications network of any known network topology (e.g. ring, mesh, etc.) comprising at least a transparent cache server and an origin server as the ones above defined.

According to another aspect of the invention, a computer program product is provided, comprising computer-executable instructions for performing any of the steps of the method previously disclosed, when the program is run on a computer and a digital data storage medium is also provided encoding a machine-executable program of instructions to perform any of the steps of the method previously disclosed.

These and other aspects of the invention will be apparent from and elucidated with reference to the embodiments described hereinafter.

The presented embodiments potentially have the following advantages when compared with the prior art:
- The present proposal works with any client type regardless of client policy (support) for off-domain redirects, unlike prior art solutions.
- Since incoming client request are seen by the Origin server and by the cache, any possible (transparent) cache failure does not affect in causing network outrage.
- Load-balancers are consequently not required for redundancy to prevent network outrage, and out-of-path transparent caches can overlay closely network topology, e.g. can be placed together with Service Routers such as Border Network Gateways (BNGs).
- Prior art transparent caching solution requires at least two transparent caches and one load balancer to prevent network outrage in case of cache failure. However, the present proposal provides superior level of protection against network outrage in case of cache failure for a single transparent cache and this leads to another benefit: The present proposal opens broader and more flexible deployment options to overlay network topology with transparent caches, for example enabling network operators to geographically distribute transparent caches in the exchanges.
- One of the most cost-efficient implementation of traffic mirroring using port mirror feature can be implemented using existing network functions, for example, it is available in Alcatel-Lucent 7750 Service Router BNG, and can be leveraged for the proposed unified transparent cache.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a system for transparent caching on the data path according to prior art, in the case that the transparent cache prompts the client to request a content from a Content Delivery Network.
Figure 2 shows a system for transparent caching on the data path according to prior art, in the case that the transparent cache redirects the client request to an origin server storing the content.
Figure 3 shows a schematic diagram of the main steps for transparent caching out of the data path in accordance with an embodiment of the present invention.
Figure 4 shows a flow diagram of the messages and steps involved in the transparent cache taking over a content delivery session at the application level according to an embodiment of the present invention.
Figure 5 shows a flow diagram of the messages and steps involved in the transparent cache taking over a content delivery session at the transport level and disconnecting the origin server according to an embodiment of the present invention.

Throughout the figures like reference numerals refer to like elements.

### DESCRIPTION OF EMBODIMENTS

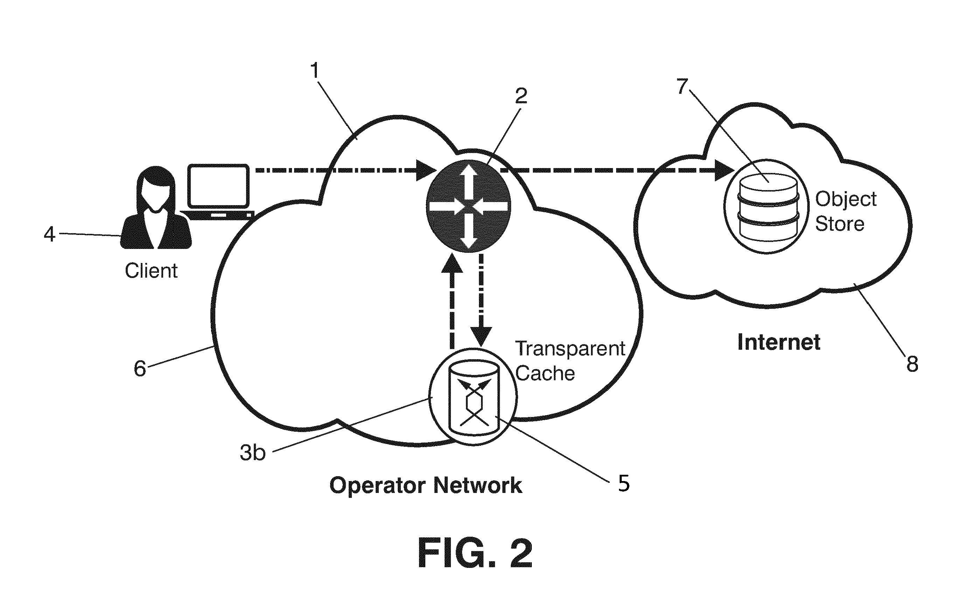

Figures 1-2 show an example of a prior-art embodiment: the 'on-the-data path' method for transparent caching presented by Verivue® in http://www.verivue.com/products-carrier-cdn-transparent-cache.asp and referred to as OneVantage™: A client (4) initiates a TCP connection (1) directly to an Object Store or Origin server (7) which is the content source. A switch or router (2) of the network (6) recognizes HTTP packets and diverts them to a -OneVantage- Transparent Cache (5) instead of forwarding them to their original destination. There are several ways to accomplish the interception of the HTTP packets in the network (6), including policy-based routing and web cache communication protocol. The OneVantage Transparent Cache (5) determines the "cache-ability" of the content andif content is cacheable , as shown in Figure 1, the Transparent Cache (5) issues an HTTP redirect message (3a) that induces the client to request the content from the operator's CDN. Otherwise, in the case that the content is not cacheable, as shown in Figure 2, the Transparent Cache (5) passes the request to the Origin server (7), that is, the original destination of the content in Internet.

Similar 'on-the-data path' prior-art solutions are available from other transparent caching providers including Cisco, Juniper and PeerApp.

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

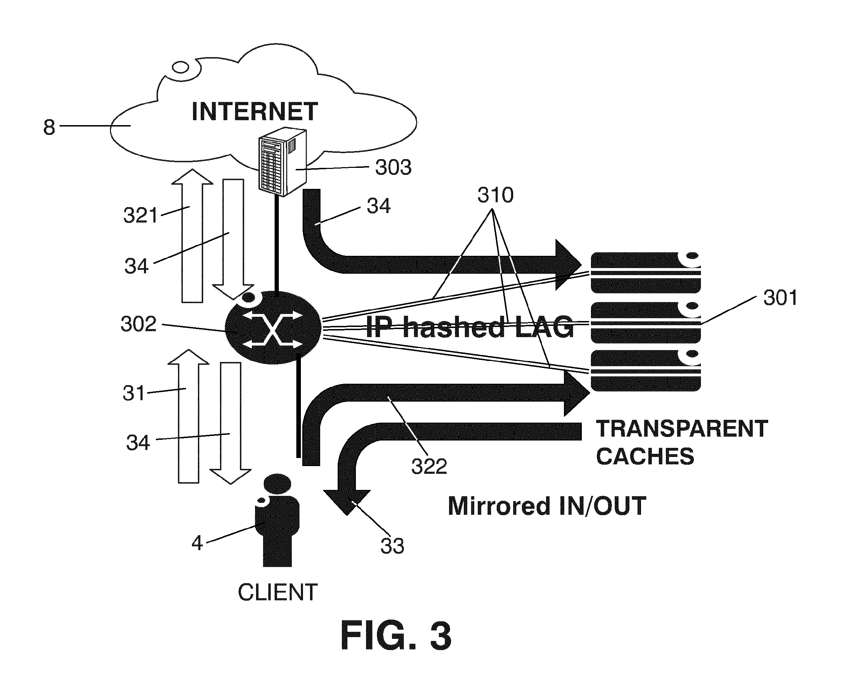

Figure 3 shows a high level block diagram of the architecture of an operator's IP network with transparent cache running out of the path according to a preferred embodiment of the invention. An origin server (303) is capable of communicating with a client (4) and capable of delivering content through one or more routers (302) of the operator's IP network, which further comprises one or more transparent cache servers (301). The, at least one, transparent cache server (301) is capable of communicating with a Content Delivery Network or CDN. The IP router (302) and the transparent cache servers (301) can be communicated through IP link or using hashed Link Aggregation Group (310) for load balancing.

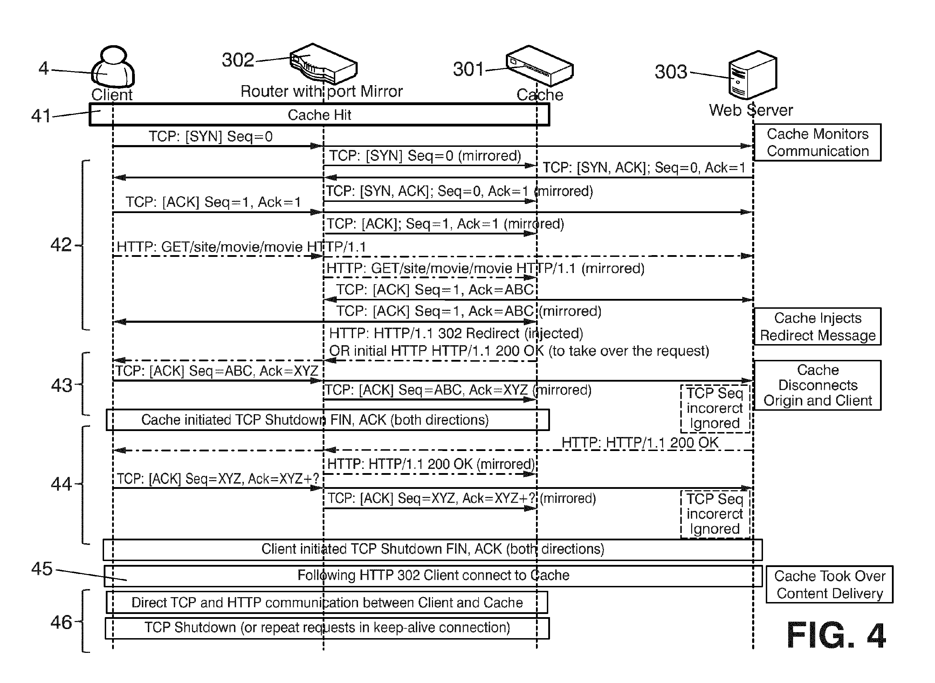

A client content request is being sent (31) from the client (4) to the network, in reply to which the network routes (321) the request, for example by means of an IP Service Router (302), to the Original destination in Internet, and also mirrors (322) the request to at least one of the transparent cache servers (301). A content delivery session is setup between the client (4) and the origin server (303) which is destined, by default, to serve the client content request. Once the content request is mirrored in a transparent cache server (301), this cache server (301) takes a decision on whether to deliver the content or not. If the transparent cache server (301) decides to deliver the content (33), this transparent cache server (301) takes over control of the content delivery session from the origin server (303), following the steps of Figures 4-5 described below, and disconnects the origin server (303) or causes the origin server to be disconnected. In the cases that the transparent cache server (301) is not the entity to deliver the content, for example, because the content is not cached, due to caching policies or even cache failure, because the decision of the transparent cache server (301) is not to perform the delivery or because, being the decision of the transparent cache server (301) to deliver the content, the origin server (303) is still being connected, the content delivery session continues (34) between the origin server (301) and the client (4). In the case that the origin server (303) is not being disconnected fast enough by the disconnection trigger of transparent cache server (301) in order to deliver the content from the transparent cache server (301), some steps to take over the content delivery session need to be repeated, until the transparent cache server (301) either successfully disconnects the origin server (303) or triggers the origin server to be disconnected and can continue delivering the request instead of the origin server (301).

If transparent cache server (301) decides to deliver the content (33), the steps for taking over content delivery session are illustrated in Figures 4-5 for HTTP and TCP protocols, application and transport levels respectively. Figures 4-5 show the session takeover at the Application and the Transport layers respectively in accordance with a possible embodiment of out of path transparent caching for HTTP delivery over TCP transport. The illustration is applicable to both progressive HTTP content delivery and segmented HTTP content delivery.

Figure 4 shows content delivery session takeover at the HTTP application layer. Transparent cache server (301) spoofs (41) IP address and TCP port number of the Origin web server (303), and mimics (42) the Origin server (303) by using TCP SEQ numbers and TCP ACK numbers which should have been used by said Origin server (303). The transparent cache server (301) injects (43) HTTP 302 Redirect message into communication between the Origin server (303) and the client (4) asking the client (4) to disconnect (44) and reconnect (45) to the cache server (301) or other selected cache to deliver the content (46).

If the cache server (301) cannot take over the session using application level HTTP redirect, e.g. if the client (4) does not answer to the redirect message and the session continues (34) between the client (4) and the Origin server (301), then the cache server (301) can fall back to taking over the delivery session at transport or network level.

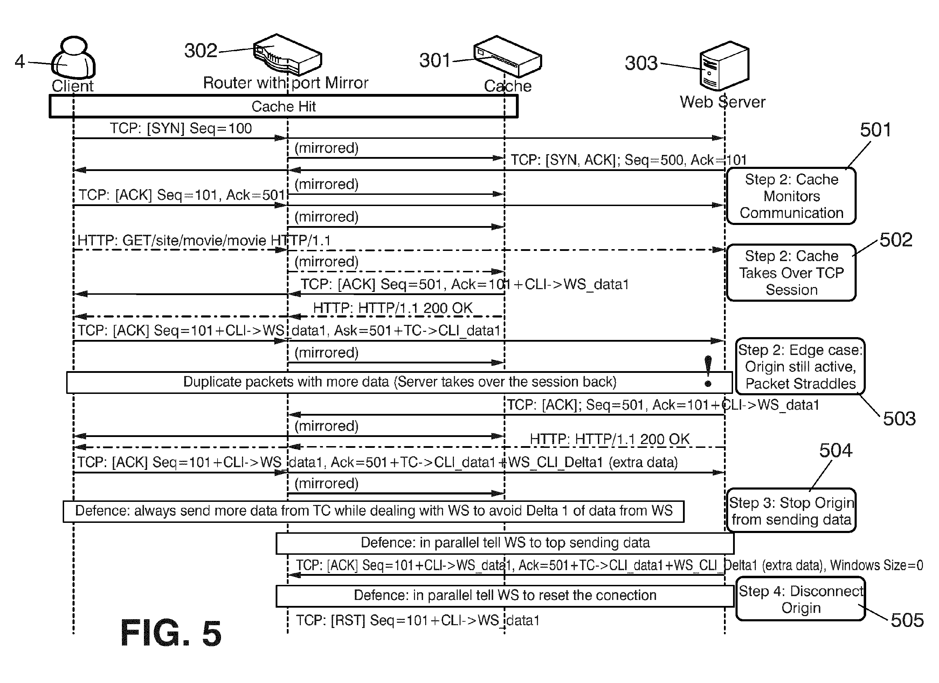

Figure 5 shows content delivery session takeover at the HTTP transport layer. The cache server (301) uses double spoofing and mimicking (501, 502): spoofs the client (4) towards the Origin server (303), and spoofs the Origin server (303) towards the client (4) mimicking correct TCP SEQ numbers and TCP ACK numbers and taking over the TCP session (502). As soon as decision is taken to deliver content by the cache server (301), the cache server (301) prevents origin server (303) from communicating with the client (4) mimicking client behaviour (501) when data buffers are full by sending to the origin server (303) TCP ACK messages with window size set to 0, which mimicks client SEQ and ACK numbers. This step blocks the origin server (303) from sending more data and protects the cache from loosing taken over sessions until the origin server (303) is disconnected, for example, if packet straddles (503). Note that always more data is sent from the cache server (301) while dealing with the Origin server (303) to avoid sending extra data from the Origin server (303) while the Origin server (303) is instructed to stop sending data (504) and reset the TCP connection. Finally, the cache server (301) disconnects (505) the origin server (303) without affecting the client mimicking client connection reset behaviour when mimicking client TCP SEQ number.

In alternative embodiment, If the cache server (301) cannot take over the session using application level redirect, e.g. if the client (4) does not answer to the redirect message and the session continues (34) between the client (4), the cache can instead change or re-write manifest file specifying URL for segmented HTTP content to point to the cache. In this case the procedure is similar to Fig 4 but with the difference that the cache sends manifest file instead of redirect message on step (43).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for content caching and delivering in IP networks, comprising:
- mirroring (322) to at least one transparent cache server (301) a request for content received from a client (4) in an IP network,
- deciding whether the requested content is delivered to the client (4) from a selected cache server or from an origin server (303) connected to the client (4) through the IP network and to which the IP network routes the received request.

2. The method for content caching and delivering according to claim 1, wherein the step of deciding whether the requested content is delivered to the client (4) is performed by the transparent cache server (301).

3. The method for content caching and delivering according to claim 2, wherein the transparent cache server (301) decides to deliver the requested content (33) from a selected cache server.

4. The method for content caching and delivering according to claim 3, wherein the selected cache server is the transparent cache server (301).

5. The method for content caching and delivering according to any of claims 2-4, further comprising the transparent cache server (301) triggering disconnection of the origin server (303).

6. The method for content caching and delivering according to any of claims 3-5, further comprising the transparent cache server (301) taking over control of a content delivery session setup between the client (4) and the origin server (303).

7. The method for content caching and delivering according to claim 6, wherein taking over control of the content delivery session is performed at the application layer of the IP network.

8. The method for content caching and delivering according to claim 6, wherein taking over control of the content delivery session is performed at the transport layer or the network layer of the IP network.

9. The method for content caching and delivering, according to any previous claim, wherein mirroring (322) the received request is performed by a router (302) of the IP network, the router (302) being provided with port mirror for mirroring content in transparent caching.

10. A transparent cache server (301) for content caching and delivering comprising:
- means for getting mirror of a request for content received from a client (4) in an IP network,
- means for deciding whether the requested content is delivered to the client (4) from a selected cache server or from an origin server (303) connected to the client (4) through the IP network and to which the IP network routes the received request.

11. The transparent cache server (301) for content caching and delivering according to claim 10, wherein the transparent cache server (301) decides to deliver the requested content (33) from the transparent cache server (301) or other cache server.

12. The transparent cache server (301) for content caching and delivering according to claim 11, further comprising means for triggering disconnection of the origin server (303) to the client (4).

13. The transparent cache server (301) for content caching and delivering according to any of claims 11-12, further comprising means for taking over control of a content delivery session, setup between the client (4) and the origin server (303), from a layer of the IP network, selected from the application layer, the transport layer and the network layer.

14. A computer program product comprising computer-executable instructions for performing the method according to any of the claims 1-9, when the program is run on a computer.

15. A digital data storage medium encoding a machine-executable program of instructions to perform a method according to any of the claims 1-9.
